# EUROPEAN PATENT SPECIFICATION

(11) **EP 0 507 276 B1**
(45) Date of publication and mention of the grant of the patent: **04.12.1996**
(21) Application number: 92105611.5
(22) Date of filing: 01.04.1992
(51) Int. Cl.: C03C 17/25, C03C 17/34

(54) **Conductive glass and manufacturing method thereof**
Leitfähiges Glas und Verfahren zu seiner Herstellung
Verre conductible et sa méthode de fabrication

(30) Priority: 03.04.1991 JP 192657/91; 27.12.1991 JP 346517/91
(43) Date of publication of application: 07.10.1992
(73) Proprietor: NIPPON SHEET GLASS CO., LTD., Osaka-shi, Osaka 541 (JP)
(72) Inventor: Misonou, Masao, c/o Nippon Sheet Glass Co., Ltd., Osaka-shi, Osaka (JP); Tonoike, Masakiyo, c/o Nippon Sheet Glass Co., Ltd, Osaka-shi, Osaka (JP); Kawahara, Hideo, c/o Nippon Sheet Glass Co., Ltd, Osaka-shi, Osaka (JP)
(74) Representative: Grünecker, Kinkeldey, Stockmair & Schwanhäusser Anwaltssozietät

(56) References cited:
- EP-A- 0 074 313
- EP-A- 0 357 263
- DE-A- 2 310 084
- US-A- 3 647 531
- US-A- 4 206 253
- CHEMICAL ABSTRACTS, vol. 85, no. 4, 26 July 1976, Columbus, Ohio, US; abstract no. 24844j, page 219 ;column L ; & JP-A-51041717
- CHEMICAL ABSTRACTS, vol. 85, no. 4, 26 July 1976, Columbus, Ohio, US; abstract no. 24845k, page 219 ;column L ; & JP-A-51041718
- CHEMICAL ABSTRACTS, vol. 99, no. 8, 22 August 1983, Columbus, Ohio, US; abstract no. 57698g, page 236 ;column R ;

## Description

The present invention relates to a conductive glass, and is particularly concerned with a conductive glass having a high strength and a high wear resistance.

A conductive glass is intended for application in various fields, such as electrodes for various displays or thin film photovoltaic solar cells, transparent touch sensors, transparent anti-static coatings and transparent electromagnetic shields. The conductive glass is exclusively obtained by coating a glass substrate with a transparent conductive coating material. For this kind of material, an oxide material displaying a semiconductor behaviour, such as stannic oxide, indium tin oxide (hereinafter referred to as ITO), zinc oxide or cadmium tin oxide is preferably employed.

Since the conductive glass is usually exposed to a place of work, a high wear resistance and chemical resistance (acid and alkali resistance) is in some cases required. Regarding security, it may be required that the glass itself has a strength remarkably higher than that of a normal glass plate. To obtain a glass plate with high strength, the glass is preferably heated up to the softening point or higher and is cooled down quickly from the surface, which is called thermal tempering, to obtain a compression stress; or the glass plate is soaked into a molten salt containing potassium ions which are thereby exchanged with sodium ions in the glass, which is called chemical tempering, and, thus, the surface compression stress is obtained according to a difference in size of the ions. In either case, the glass is exposed to a high temperature of about 400° C to 600°C in a process for increasing the strength thereof.

JP-A-7641717 and JP-A-7641718 disclose a glass having improved wear-strength, which is obtained by exposing a glass to (CH₃)₂SnCl₂, heating the glass to coat same with a stannic oxide film and immersing the coated glass in molten KNO₃ at 500°C for 5 seconds. PL-118338 [Chemical Abstracts, 99:57698g, page 236 (1983)] discloses a method for reinforcement of glassware, wherein domestic glass ware is vapor-coated with Sn, the metal film is oxidized and then the coated glassware is dipped into molten KNO₃ at 400 to 460°C for 30 to 80 minutes.

So far, it was, however, difficult to concurrently satisfy electrical characteristics of the conductive glass, mechanical strength of the coat and glass substrate strength. For example, an ITO film typical as the transparent conductive film has superior electrical characteristics, but is weak in wear resistance and chemical resistance of the film, and an additional problem inherent to this film is that the electrical characteristics deteriorate or the film is damaged when carrying out thermal tempering or chemical tempering for strengthening the conductive glass.

A stannic oxide film is superior to the ITO film regarding wear resistance. However, in case the strength of the conductive glass is to be increased by thermal tempering, a sudden change in the temperature of the process may often cause cracks on the film or a severe deformation of the glass substrate. Accordingly, for the thermal tempering, a strict temperature control will be necessary, or the productivity sometimes deteriorates.

Further, EP-A-74313 discloses that a glass substrate which had first been subjected to thermal tempering and chemical tempering is coated with a transparent conductive film.

However, if the coating temperature in this process is too high, the surface compression stress layer will vanish due to diffusion of alkali atoms.

Accordingly, a method comprising coating at low temperature after the tempering has to be applied (for example vacuum deposition and sputtering) as preferred means for obtaining a conductive glass having a satisfactory strength. Since the equipment for such a method requires vacuum, the coating costs become inevitably high.

It is the object of the present invention to solve the problems of the prior art and to provide a conductive glass having a high strength and a high wear resistance, and a method for manufacturing same.

Said object is achieved by a conductive glass comprising a glass substrate having applied thereto a coating constituted mainly of potassium-containing stannic oxide and comprising a fluorine-containing compound, wherein the thickness of the coating is in the range of 1 to 100 nm, the potassium concentration is 0.1 to 10 wt % and the glass surface compression stress of the conductive glass is 196 to 980 MPa (20 to 100 kg/mm²), said coating being obtainable by thermally decomposing a raw material liquid containing dioctyltin diacetate (C₈H₁₇)₂Sn(OCOCH₃)₂ as a tin raw material and a fluorine-containing compound at an atomic ratio of (fluorine)/(tin) in the liquid of 0.1 to 10 in the vicinity of the substrate surface and then bringing the glass into contact with molten potassium nitrate to thereby incorporate potassium into the glass substrate and the coating.

Further, the present invention provides a method for manufacturing the above disclosed conductive glass according to the present invention by forming on a glass substrate a coating constituted mainly of stannic oxide and then bringing it into contact with molten potassium nitrate to thereby incorporate potassium into the glass substrate substrate and the coating, characterized in that said coating which is constituted mainly of the stannic oxide is formed by atomizing a raw material liquid containing dioctyltin diacetate (C₈H₁₇)Sn(OCOCH₃)₂ as a tin raw material and a fluorine-containing compound at an atomic ratio of (fluorine)/(tin) in the liquid of 0.1 to 10 onto the high-temperature glass substrate to cause thermal decomposition in the vicinity of the glass substrate surface.

The glass substrate generally contains sodium. Preferably, the glass substrate comprises float glass.

According to the present invention, chemical tempering is conducted after forming the stannic oxide film with a proper thickness, thereby enhancing the glass strength without largely deteriorating the electrical characteristics of the film. Further, the wear resistance is also enhanced when containing potassium in the stannic oxide film.

In the following the drawings are briefly described.

Figure 1 is a concentration profile in the direction of depth of Na and K ions after chemical tempering of a glass substrate coated with stannic oxide.

Figure 2 is a concentration profile in the direction of depth of Sn, Si, Na and K in the film and on the glass substrate coated with stannic oxide.

Figure 3 is a wear resistance test result of a conductive glass before and after chemical tempering of the glass substrate coated with stannic oxide.

Figure 4 is a wear resistance test result of a conductive glass before and after chemical tempering of the glass substrate coated with stannic oxide according to the present invention.

Figure 5 is a concentration profile in the direction of depth of Sn, Si, Na and K in the film and on the glass substrate surface after chemical tempering of the glass substrate coated with stannic oxide according to the present invention.

In the following the present invention is described in more detail, referring to preferred embodiments.

The float glass preferably employed in the method according to the present invention has the following composition (the amounts are given in % by weight):

| | | | |
|---|---|---|---|
| SiO₂ | 68 ∼ 74 | Fe₂O₃ | 0 ∼ 1 |
| Aℓ₂O₃ | 0 ∼ 3 | CaO | 6 ∼ 14 |
| B₂O₃ | 0 ∼ 5 | MgO | 0 ∼ 6 |
| Na₂O | 10 ∼ 18 | | |
| K₂O | 0 ∼ 3 | | |

According to the present invention, the stannic oxide film is formed by thermal decomposition of dioctyltin diacetate, which is a tin compound having thermal decomposition properties, e.g. by spraying or a CVD process. Thermal decomposition is advantageous from the viewpoint of productivity.

According to the present invention fluorine is added to the stannic oxide film in form of a fluorine-containing compound in order to improve the electrical charactertistics of the film. Examples of the fluorine containing compound are HF, CCl₂F₂, CHClF₂, CH₃CHF₂, CH₃Br, CF₃COOH and NH₄F. Among these compounds trifluoroacetic acid is preferrred.

It is preferable that the film is formed by the CVD process, i.e. by brining the vapor of the above raw materials together with an oxidative gas, such as oxygen, into contact with the heated glass. Alternatively, the film is formed by spraying the raw materials dissolved in an organic solvent, such as alcohol, benzene or toluene, onto the heated glass.

The electric resistance of the coated film constituted mainly of stannic oxide, formed according to one of the above processes, decreases with increasing thickness of the film. However, if the film becomes too thick, the transparency deteriorates due to the optical absorption of the film, or the ion exchange in the chemical tempering process will become difficult. According to the present invention the film thickness is therefore with the range of 1 to 100 nm, preferably 5 to 50 nm.

In the method of the present invention, the film constituted mainly of stannic oxide is formed on the glass substrate, and then the coated glass substrate is subjected to chemical tempering. The chemical tempering is carried out by melting potassium nitrate and soaking the glass therewith for a predetermined period of time.

The value of the electric resistance of the conductive glass thus obtained slightly increases compared with the electric resistance before the chemical tempering. However, this is practically not relevant.

The change in the electric resistance was measured by a reciprocating slide tester. Thereby the wear resistance of the film was also tested. It was found that the initial value of the resistance of a chemically tempered film was high and did not change largely.

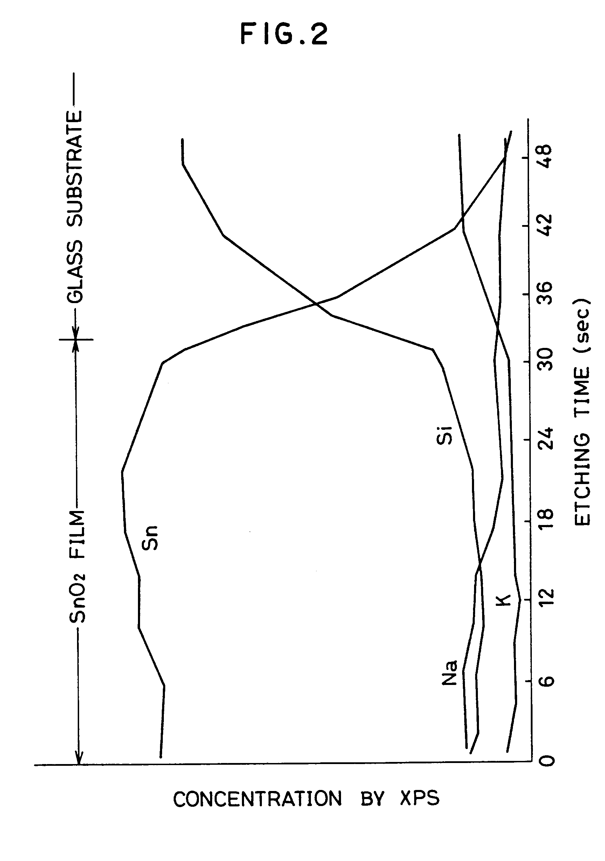

Finally, the value of the resistance was inverted, and the chemically tempered film had a higher durability. The particular reason therefore is not known. However, it is conceivable that potassium which was distributed almost uniformly in the stannic oxide film as shown in Figure 2, has an influence thereon.

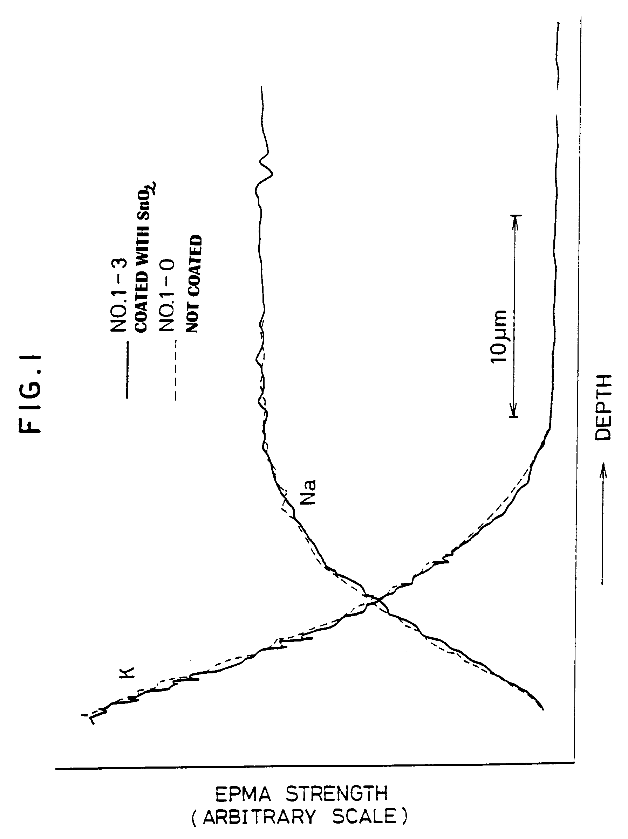

Further, when evaluating the strength of the coated glass on a glass surface stress measuring apparatus using a photoelasticity process, it was found that a coated glass having a strength comparable with a sample not having a film of stannic oxide was obtainable. Further the same concentration profile of potassium after chemical tempering in the direction of depth was observed in the glass surface coated with stannic oxide and in the glass surface not having a stannic oxide film, as shown in Figure 1.

According to the present invention, the concentration of potassium in the stannic oxide film after chemical tempering is 0.1 to 10 wt %. If the potassium concentration is lower than 0.1 wt %, the effect of enhancing the wear resistance decreases. If the potassium concentration exceeds 10 wt %, the properties of the conductive glass are affected. For example, the electric resistance of the film becomes high.

The value of the surface compression stress of the coated glass after chemical tempering is 196 to 980 MPa (20 to 100 kg/mm²) according to the present invention.

If the surface compression stress value exceeds 980 MPa (100 kg/mm²), unstableness occurs in the proximity of the breaking stress value (about 1960 to 2940 MPa (200 to 300 kg/mm²), which may cause a self-breakdown and is, hence, not desirable. On the other hand, if the surface compression stress value is less than 196 MPa (20 kg/mm²), the strength of the conductive glass is not increased; moreover, the difference to the surface compression stress of the uncoated surface (usually subjected to chemical tempering) becomes large, having adverse effects, such as warp.

As described above, spraying or a CVD process is a preferred forming method for the coating constituted mainly of stannic oxide. However, the following problems arise in the prior art when forming a stannic oxide film by the spraying process. For instance tin compounds containing chlorine, such as SnCl₄ or (CH₃)₂SnCl₂, and the decomposition products thereof are highly corrosive and, hence, a corrosion resisting material must be used for the driving device, exhaust and other peripheral equipment which comes into contact with the gas. This is not desirable in view of costs. Meanwhile, dibutyltin laurate (C₄H₉)₂Sn(CH₃(CH₂)₁₀COO)₂ and dibutyltin maleate (C₄H₉)₂Sn(CHCOO)₂, which are comparatively low in toxicity, do not contain chlorine and are easy to handle, have been tested as raw materials for the stannic oxide film. However, the specific resistance of the stannic oxide film obtained from these materials is high and the characteristics as a transparent conductor are inferior.

Further, dibutyltin diacetate (C₄H₉)₂Sn(OCOCH)₃)₂ has been tested as a raw material for the stannic oxide film. Although the stannic oxide film obtainable with said material has superior electrical characteristics, the use of said material is not practical due to its high toxicity.

Thus, a suitable raw material for the stannic oxide film of high quality, which is low in toxicity, does not generate a corrosive gas during the coating, can be used in the spraying process and leads to a stannic oxide film having a low specific resistance, has not yet been provided.

As stated above, according to the present invention a thin film consisting mainly of stannic oxide is formed on a substrate by thermal decomposition, using dioctyltin diacetate (C₈H₁₇)₂Sn(OCOCH₃)₂ and a fluorine-containing compound as raw materials, having an atomic ratio of (fluorine)/(tin) in the liquid of 0.1 to 10. Trifluoroacetic acid (CF₃COOH) is preferably employed as the fluorine containing compound. The liquid raw material composition is preferably sprayed onto a high-temperature glass substrate to be coated and, thus, a transparent conductive film is formed by thermal decomposition in the vicinity of the glass substrate surface.

According to the present invention a stannic oxide film of high quality is obtainable from a raw material which has low toxicity, does not generate a corrosive gas during coating and leads to a film having a low specific resistance, by using dioctyltin diacetate (C₈H₁₇)₂Sn(OCOCH₃)₂ as the raw material in the spraying process.

Compared to dibutyltin diacetate, the raw material used according to the present invention does not only have a high number of carbon atoms in the alkyl group and a low toxicity itself, but also has a low vapor pressure and, thus, a reduced capability of inhalation. Furthermore, it is advantageous that the raw material can easily be dissolved in many kinds of solvents, such as alcohols (e.g. ethyl alcohol, n-propyl alcohol, i-propyl alcohol and butyl alcohol), aromatic solvents (e.g. toluene, benzene and xylene) and ketones (e.g. diethyl ketone and methyl ethyl ketone).

A stannic oxide film is obtainable by atomizing dioctyltin diacetate dissolved in such a solvent in a predetermined amount through a spray nozzle, and spraying it onto a glass substrate preheated to 400 to 700°C. The concentration may be selected according to the relation between the spraying amount per unit of time and the deposition rate per unit of time. However, 1 vol % to 50 vol % will be practically suitable.

For improving the electrical characteristics of stannic oxide, a fluorine-containing raw material or an antimony-containing raw material are usually mixed properly into the raw material solution for coating. However, fluorine-containing compounds provide better results in thermal decomposition. For this purpose, ammonium fluoride (NH₄F) and trifluoroacetic acid (CF₃COOH) are well known in the art. Since these compounds have to be dissolved in a predetermined solvent as mentioned above, trifluoroacetic acid is more preferred because it is dissoluble in more kinds of solvents. The amount of the fluorine-containing compound to be dissolved is at an atomic ratio of (fluorine)/(tin) in the liquid of 0.1 to 10.

If the atomic ratio in the raw material solution of (fluorine)/(tin) is less than 0.1, the electrical characteristics deteriorate. If it is higher than 10, unexpectedly not only the electrical characteristics are saturated but also, for example, the abrasion resistance of the film deteriorates.

According to a further embodiment of the present invention, dioctyltin diacetate is atomized with ultrasonic waves as an energy source, and brought into contact with a preheated glass surface, thereby obtaining a stannic oxide coating. In this case, an organic solvent is not necessary.

The present invention will now be described in more detail with reference to the following examples.

### Comparative Example 1

A float glass plate of 100 mm² (5 mm thick) (transmittance to visible light being 88.1 %) having the following composition (wt%) was prepared:

| | | | | | | | | | |
|---|---|---|---|---|---|---|---|---|---|
| SiO₂: | 71.1 | Al₂O₃: | 1.5 | B₂O₃ : | 0 | CaO: | 8.9 | MgO: | 3.9 |
| K₂O: | 0.9 | Na₂O: | 13.3 | Fe₂O₃ : | 0.1 | | | | |

The glass plate was thoroughly washed and used as a substrate. A stannic oxide film was formed on said substrate by the CVD process using a mixed gas consisting of monobutyl tin trichloride,
steam, oxygen gas, 1,1-difluoroethane gas and nitrogen gas. The temperature of the glass substrate was 540° C. The flow rate of the raw materials was changed properly, thereby obtaining three samples having films of different thickness. The electric resistance (resistance between two terminals spaced 1 cm) and the transmittance to visible light of the conductive glass are given in Table 1.

| No. | SnO₂ film thickness (nm) | Before chemical tempering | | After chemical tempering | | Glass surface compression stress **[MPa]** (kg/mm²) | Remarks |
|---|---|---|---|---|---|---|---|
| | | Resistance (Ω) | **Transmittance to visible light (%)** | Resistance (Ω) | **Transmittance to visible light (%)** | | |
| 1-0 | None | - | 88.1 | - | 88.3 | **436.1 (44.5)** | Comparative example |
| 1-1 | 8.5 | 2.06×10⁶ | 87.9 | 1.60×10⁷ | 87.7 | **436.1 (44.5)** | -"- |
| 1-2 | 10.0 | 2.80×10⁵ | 86.8 | 2.30×10⁶ | 86.8 | **438.1 (44.7)** | -"- |
| 1-3 | 20.0 | 1.90×10⁴ | 84.0 | 1.00×10⁵ | 84.1 | **436.1 (44.5)** | -"- |

Next, the three coated glass substrates No. 1-1 to 1-3 were soaked with molten potasssium nitrate (470° C) for 4.5 hours, then drawn up and cooled down slowly. For comparison, a float glass plate substrate (5 mm thick) not having a stannic oxide film was soaked at the same time. The substrates were subsequently washed in water and the electric resistance and the transmittance to visible light were measured. The results are shown in Table 1.

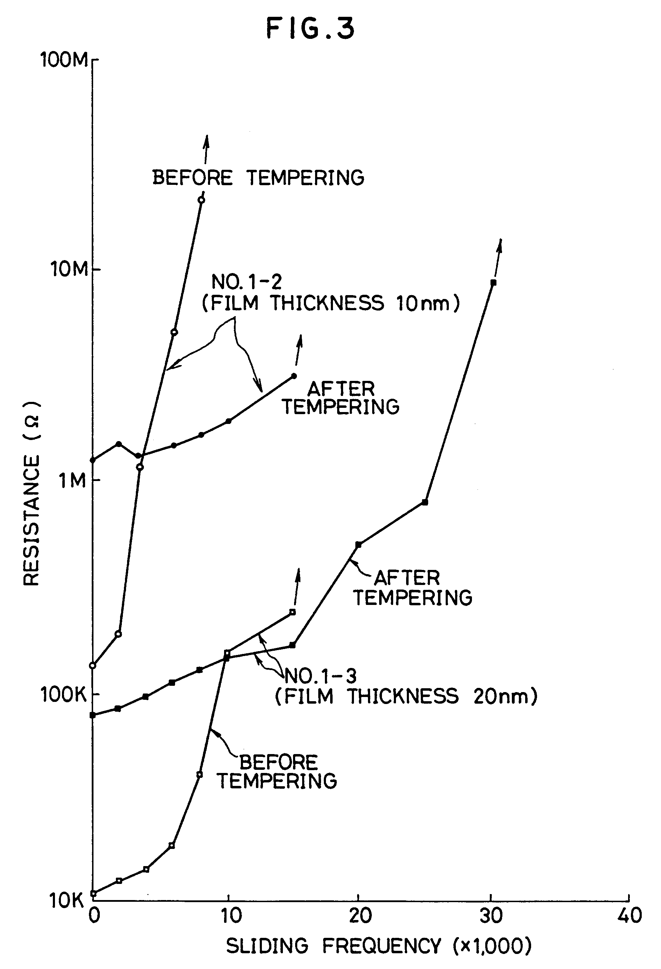

Small pieces of 50 x 70 mm were cut out of samples Nos. 1-2 and 1-3 before and after chemical tempering in order to examine the wear resistance of the stannic oxide film. The change of the electric resistance was measured by a reciprocating slide tester. The results are shown in Figure 3.

Next, a small piece of 30 mm² was but out of each sample, and the surface compression stress of each glass sample subjected to the above tempering process was measured by a glass surface stress measuring apparatus. The results are also shown in Table 1.

In order to ensure whether an ion exchange had been effected or not, a concentration profile of sample Nos. 1-0 and 1-3 in the direction of depth of potassium ions and sodium ions was recorded by EPMA (Electron Probe X-ray Microanalyzer). The results are shown in Figure 1.

From Figure 1 it is apparent that a similar profile is obtainable irrespective of the presence of a stannic oxide film.

Further, to grasp the influence of chemical tempering on the stannic oxide film, a concentration profile in the direction of depth of Sn, K, Na, Si was measured by XPS (X-ray photoelectron spectroscopy). The results are shown in Figure 2.

From Figure 2, it is apparent that potassium is distributed almost uniformly in the stannic oxide film and the glass substrate.

### Comparative Example 2

A float glass plate of 100 mm² (5mm thick) (transmittance to visible light being 89.5%) was prepared.

The glass plate was thoroughly washed and used as a substrate. A stannic oxide film was formed on said substrate by the following process.

Dibutyltin diacetate, trifluoroacetic acid and isopropanol are mixed in the following ratio and the liquid is sprayed on glass heated to 600°C to obtain a stannic oxide film.

| | |
|---|---|
| Dibutyltin diacetate | 10.0 g |
| Trifluoroacetic acid | 1.6 g |
| Isopropanol | 200 ml |

The spraying time was changed to obtain three samples having films of different thickness. The electric resistance (resistance between two terminals spaced 1 cm) and the transmittance to visible light of the conductive glass are given in Table 2.

**TABLE 2**

| No. | SnO₂ film thickness (nm) | Before chemical tempering | | After chemical tempering | | Glass surface compression stress [MPa] (kg/mm²) | Remarks |
|---|---|---|---|---|---|---|---|
| | | Resistance (Ω) | transmittance to visible light (%) | Resistance (Ω) | transmittance to visible light (%) | | |
| 2-0 | None | - | 89.5 | - | 89.5 | 538.0 (54.9) | Comparative example |
| 2-1 | 5.0 | 1.03×10⁷ | 88.8 | 5.05×10⁷ | 88.3 | 494.9 (50.5) | -"- |
| 2-2 | 9.0 | 9.07×10⁵ | 84.8 | 4.55×10⁶ | 87.6 | 474.3 (48.4) | -"- |
| 2-3 | 15.0 | 6.80×10⁴ | 84.8 | 1.95×10⁵ | 84.7 | 436.1 (44.5) | -"- |

Next, the three coated glass substrates were soaked with molten potassium nitrate (470°C) for 4.5 hours, then drawn up and cooled down slowly. For comparison, a float glass plate substrate (5 mm thick) not having a stannic oxide film was soaked at the same time. The substrates were subsequently washed in water and the electric resistance and the transmittance to visible light were measured. The results are shown in Table 2.

Next, a small piece of 30 mm² was cut out of each sample, and the surface compression stress of each glass sample subjected to the above tempering process was measured by a glass surface stress measuring apparatus. The results are also given in Table 2.

A small piece of 50 x 70 mm was cut out of the remaining samples for examining the wear resistance of the stannic oxide film. The change of the electric resistance was measured by a reciprocating slide tester. The results were the same as in Example 1.

The above results show that by subjecting a glass substrate having a stannic oxide film to an ion exchange treatment by carrying out chemical tempering process, a glass having a high strength was obtainable. The wear resistance of the film was remarkably increased at the same time.

### Example 1

A float glass plate of 100 mm² (3 mm thick) was prepared. The glass plate was thoroughly washed and used as a substrate. A stannic oxide film was formed on said substrate by the following process.

A raw material liquid was prepared by mixing dioctyltin diacetate (DOTA) as the tin raw material, trifluoroacetic acid and isopropanol in the following ratio:

### (Raw material liquid))

| | |
|---|---|
| Dioctyltin diacetate | 67 g (about 0.14 mol/l) |
| Trifluoroacetic acid | 8.3 |
| Isopropanol | 1 l |

The liquid was sprayed onto the glass substrate heated to 600 °C to obtain a stannic oxide film.

A correlation between the sheet resistance and the transmittance to visible light of four samples having stannic oxide films of different thickness, which had been obtained by controlling the spraying time properly, is shown in Table 3.

For comparison, stannic oxide films of different thickness were formed by properly controlling the spraying time in the same way as above, except that a raw material liquid containing dibutyltin maleate (DBTM) as the tin raw material, trifluoroacetic acid and isopropanol in the following ratio was used.

### (Raw material liquid)

| | |
|---|---|
| Dibutyltin maleate | 50 g (about 0.14 mol/l) |
| Trifluoroacetic acid | 8.3 g |
| Isopropanol | 1 l |

The liquid was sprayed onto the glass substrate heated to 600 °C to obtain a stannic oxide film. The correlation between the sheet resistance and the transmittance to visible light is also shown in Table 3.

**TABLE 3**

| No. | Tin raw material | Film thickness (A) | **Transmittance to visible light (%)** | Resistance (Ω) | Specific resistance (Ωcm) |
|---|---|---|---|---|---|
| 3-1 | DOTA | 230 | 87.8 | 1.8×10⁵ | 0.42 |
| 3-2 | DOTA | 250 | 87.4 | 2.9×10⁵ | 0.73 |
| 3-3 | DOTA | 320 | 86.1 | 3.0×10⁴ | 0.10 |
| 3-4 | DOTA | 330 | 86.0 | 2.4×10⁴ | 0.08 |
| 3-5 | DBTM | 150 | 89.4 | 1.4×10⁷ | 21 |
| 3-6 | DBTM | 160 | 89.2 | 4.0×10⁶ | 6.4 |
| 3-7 | DBTM | 360 | 85.9 | 3.2×10⁵ | 1.2 |
| 3-8 | DBTM | 420 | 85.1 | 3.2×10⁵ | 1.3 |

### Example 2

Next, it was examined how the atomic ratio of (fluorine)/(tin) in the raw material liquid influences the sheet resistance of the stannic oxide film. A glass substrate was prepared in the same was as in Example 1. The raw material liquid was prepared by mixing DOTA, trifluoroacetic acid and isopropanol in an atomic ratio of (fluorine)/(tin) in the raw material liquid as shown in Table 4, and the liquid was sprayed onto the glass substrate heated to 600° C to obtain a stannic oxide film.

The film was made 25 nm (250 Å) thick by controlling the spraying amount and time. The resistances of the films were measured and the results are shown in Table 4.

**TABLE 4**

| No. | F/Sn ratio in liquid | Resistance (Ω) |
|---|---|---|
| 4-1 | 0 | 4.0×10⁷ |
| 4-2 | 0.75 | 1.5×10⁶ |
| 4-3 | 1.5 | 2.9×10⁵ |
| 4-4 | 6 | 4.0×10⁴ |
| 4-5 | 10 | 5.0×10⁴ |
| 4-6 | 20 | 8.5×10⁴ |

It will be apparent from Table 4, that in Sample No. 4-1, wherein the atomic ratio of fluorine)/(tin) in the raw material liquid is less than 0.1, the electrical characteristics are unsatisfactory for practical use. If the atomic ratio is greater than 10 as in sample No. 4-6, the electrical characteristics are saturated, and no effect can be expected from further increasing the fluorine content of the raw material liquid.

### Example 3

A float glass plate of 100 mm² (3 mm thick) was prepared. The glass plate was thoroughly washed and used as a substrate. A stannic oxide film was formed on said substrate by the following process.

A raw material liquid was prepared by mixing dioctyltin diacetate (DOTA) as a tin raw material, trifluoroacetic acid and iosopropanol in the following ratio:

### (Raw material liquid)

| | |
|---|---|
| Dioctyltin diacetate | 67 g (0.22 mol/l) |
| Trifluoroacetic acid | 8.3 g |
| Isopropanol | 1 l |

The liquid was sprayed onto the glass substrate heated to 600 °C to obtain a stannic oxide film.

A correlation between the sheet resistance and the transmittance to visible light of four samples having stannic oxide films of different thickness which had been obtained by controlling the spraying time properly, is shown in Table 5.

Next, the four coated glass substrates Nos. 5-1 to 5-4 were soaked with molten potassium nitrate (470° C) for 4.5 hours, then drawn up and cooled down slowly. For comparison, a float glass plate substrate (3 mm thick) not having as stannic oxide film was soaked at the same time. The substrates were subsequently washed in water and the electric resistance and the transmittance to visible light were measured. The results are shown in Table 5.

Next, a small piece of 30 mm² was cut out of each sample, and the surface compression stress of each glass sample subjected to the above tempering process was measured by a glass surface stress measuring apparatus. The results are also shown in Table 5.

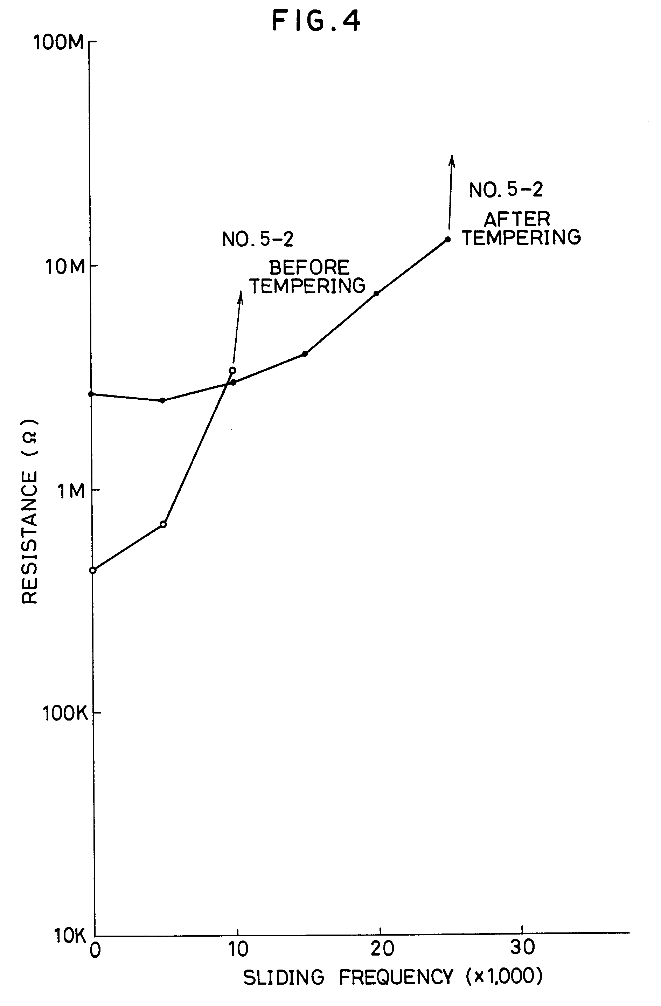

Small pieces of 50 x 70 mm were cut out of sample No. 5-2 before and after chemical tempering in order to examine the wear resistance of the stannic oxide film. The change of the electric resistance was measured by a reciprocating slide tester. The results are shown in Figure 4.

In order to ensure as to whether an ion exchange had been effected or not, a concentration profile of sample No. 5-2 in the direction of depth of potassium ions and sodium ions was measured on the glass substrate surface by EPMA (Electron Probe X-ray Microanalyzer). Since the result is the same as shown in Figure 1, it is apparent that a similar profile is obtainable irrespective of the presence of a stannic oxide film.

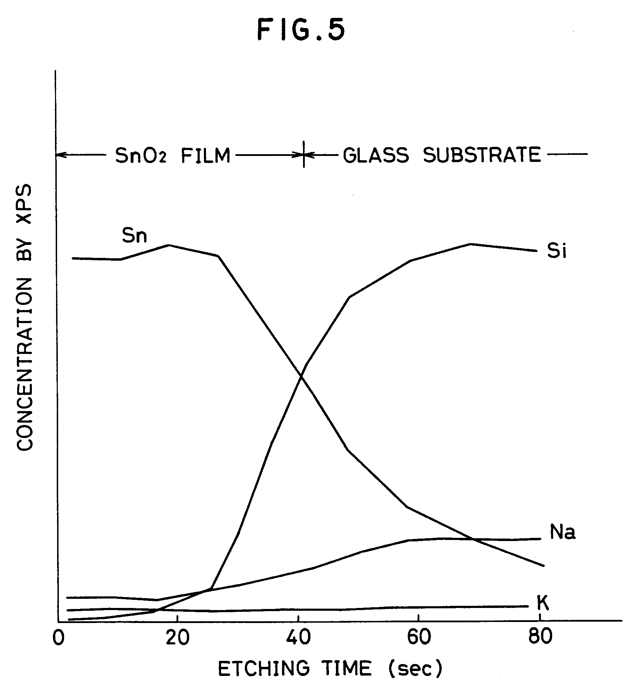

Further, to grasp an influence of chemical tempering on the stannic oxide film, a concentration profile in the direction of depth of Sn, K, Na, Si was measured by XPS (X-ray photoelectron spectroscopy). The results are shown in Figure 5.

From Figure 5, it is apparent that potassium is distributed almost uniformly in the stannic oxide film and the glass substrate.

**TABLE 5**

| No. | SnO₂ film thickness (nm) | Before chemical tempering | | After chemical tempering | | Glass surface compression stress [MPa] (kg/mm²) | Remarks |
|---|---|---|---|---|---|---|---|
| | | Resis tance (Ω) | Transmittance to visible light (%) | Resistance (Ω) | Transmittance to visible light (%) | | |
| 5-0 | None | - | 90.1 | - | 90.1 | 555.7 (56.7) | Comparative example |
| 5-1 | 16.0 | 1.2×10⁶ | 87.6 | 9.0×10⁶ | 87.7 | 534.1 (54.5) | Operative example |
| 5-2 | 19.0 | 4.4×10⁵ | 86.7 | 2.7×10⁶ | 86.5 | 492.9 (50.3) | Operative example |
| 5-3 | 23.0 | 3.1×10⁵ | 86.4 | 1.6×10⁶ | 85.9 | 514.5 (52.5) | Operative example |
| 5-4 | 25.5 | 9.0×10⁴ | 85.6 | 6.4×10⁵ | 85.7 | 551.7 (56.3) | Operative example |

According to the present invention a stannic oxide film is formed by thermal decomposition of a starting raw material containing a predetermined ratio of a fluorine compound and dioctyltin diacetate. Since dioctyltin diacetate does not contain chlorine, it is ensured that members constructing a coating device are free from corrosion caused by chlorine. Furthermore, a film with better electrical characteristics is obtainable than with analogous tin compounds not containing chlorine. Additionally, a compound safe to the human body is used.

## Claims

1. A conductive glass comprising a glass substrate having applied thereto a coating constituted mainly of potassium-containing stannic oxide and comprising a fluorine-containing compound, wherein the thickness of the coating is in the range of 1 to 100 nm, the potassium concentration is 0.1 to 10 wt % and the glass surface compression stress of the conductive glass is 196 to 980 MPa (20 to 100 kg/mm²), said coating being obtainable by thermally decomposing a raw material liquid containing dioctyltin diacetate (C₈H₁₇)₂Sn(OCOCH₃)₂ as a tin raw material and a fluorine-containing compound at an atomic ratio of (fluorine)/(tin) in the liquid of 0.1 to 10 in the vicinity of the substrate surface and then bringing the glass into contact with molten potassium nitrate to thereby incorporate potassium into the glass substrate and the coating.

2. A method for manufacturing the conductive glass according to claim 1 by forming on a glass substrate a coating constituted mainly of stannic oxide and then bringing it into contact with molten potassium nitrate to thereby incorporate potassium into the glass substrate and the coating, characterized in that said coating which is constituted mainly of the stannic oxide is formed by atomizing a raw material liquid containing dioctyltin diacetate (C₈H₁₇)Sn(OCOCH₃)₂ as a tin raw material and a fluorine-containing compound at an atomic ratio of (fluorine)/(tin) in the liquid of 0.1 to 10 onto the high-temperature glass substrate to cause thermal decomposition in the vicinity of the glass substrate surface.

3. The method for manufacturing a conductive glass according to claim 2, wherein the fluorine-containing compound is trifluoroacetic acid.

## Patentansprüche

1. Leitfähiges Glas umfassend ein Glassubstrat mit einem darauf angebrachten Überzug, der sich hauptsächlich aus kaliumhaltigem Zinndioxid zusammensetzt und eine fluorhaltige Verbindung umfaßt, worin die Dicke des Überzugs im Bereich von 1-100 nm liegt, die Kaliumkonzentration 0,1 bis 10 Gew.-% beträgt und die Druckspannung der Glasoberfläche des leitfähigen Glases 196 bis 980 MPa (20 bis 100 kg/mm²) beträgt, wobei der Überzug dadurch erhalten werden kann, daß eine Ausgangsmaterialflüssigkeit, welche Dioctylzinndiacetat (C₈H₁₇)₂Sn(OCOCH₃)₂ als Zinnausgangsmaterial und eine fluorhaltige Verbindung in einem Atomverhältnis von (Fluor)/(Zinn) in der Flüssigkeit von 0,1 bis 10 enthält, in der Nähe der Substratoberfläche thermisch zersetzt wird und dann das Glas mit geschmolzenen Kaliumnitrat in Kontakt gebracht wird, um dadurch Kalium in das Glassubstrat und den Überzug einzubauen.

2. Verfahren zum Herstellen des leitfähigen Glases nach Anspruch 1 dadurch, daß ein hauptsächlich aus Zinndioxid zusammengesetzter Überzug auf einem Glassubstrat gebildet wird und es dann mit geschmolzenem Kaliumnitrat in Kontakt gebracht wird, um dadurch Kalium in das Glassubstrat und den Überzug einzubauen, **dadurch gekennzeichnet,** daß der Überzug, welcher sich hauptsächlich aus dem Zinndioxid zusammensetzt, gebildet wird durch Zerstäuben einer Ausgangsmaterialflüssigkeit, welche Dioctylzinndiacetat (C₈H₁₇)₂Sn(OCOCH₃)₂ als Zinnausgangsmaterial und eine fluorhaltige Verbindung in einem Atomverhältnis von (Fluor)/(Zinn) in der Flüssigkeit von 0,1 bis 10 enthält, auf das Glassubstrat mit hoher Temperatur, so daß eine thermische Zersetzung in der Nähe der Glassubstratoberfläche herbeigeführt wird.

3. Verfahren zum Herstellen eines leitfähigen Glases nach Anspruch 2, worin die fluorhaltige Verbindung Trifluoressigsäure ist.

## Revendications

1. Verre conducteur comprenant un substrat en verre sur lequel est appliqué un revêtement principalement constitué d'oxyde stannique contenant du potassium et comprenant un composé contenant du fluor, dans lequel l'épaisseur du revêtement est dans la gamme de 1 à 100 nm, la concentration en potassium est 0,1 à 10 % en poids et la contrainte de compression de la surface du verre conducteur est 196 à 980 MPa (20 à 100 kg/mm²), ledit revêtement pouvant être obtenu en décomposant thermiquement une matière première liquide contenant du diacétate de dioctylétain (C₈H₁₇)₂Sn(OCOCH₃)₂ en tant que matière première d'étain et un composé contenant du fluor à un rapport atomique de (fluor)/(étain) dans le liquide de 0,1 à 10 au voisinage de la surface du substrat, puis en mettant le verre au contact de nitrate de potassium fondu pour incorporer ainsi du potassium dans le substrat en verre et le revêtement.

2. Procédé de fabrication du verre conducteur selon la revendication 1 en formant sur un substrat en verre un revêtement principalement constitué d'oxyde stannique puis en le mettant en contact avec du nitrate de potassium fondu pour incorporer ainsi du potassium dans le substrat en verre et le revêtement, caractérisé en ce que ledit revêtement qui est principalement constitué de l'oxyde stannique est formé en atomisant une matière première liquide contenant du diacétate de dioctylétain (C₈H₁₇)₂Sn(OCOCH₃)₂ en tant que matière première d'étain et un composé contenant du fluor à un rapport atomique de (fluor)/(étain) dans le liquide de 0,1 à 10 sur le substrat en verre à haute température pour provoquer la décomposition thermique au voisinage de la surface du substrat en verre.

3. Procédé de fabrication d'un verre conducteur selon la revendication 2, dans lequel le composé contenant du fluor est l'acide trifluoroacétique.
